(19) **Europäisches Patentamt European Patent Office Office européen des brevets**

(11) **EP 2 418 377 B1**

(12) **EUROPEAN PATENT SPECIFICATION**

(45) Date of publication and mention of the grant of the patent:
**27.03.2013 Bulletin 2013/13**

(51) Int Cl.:
*F03D 1/06* (2006.01)  *F03D 11/00* (2006.01)
*G01B 11/16* (2006.01)  *G01B 11/27* (2006.01)

(21) Application number: **10382230.0**

(22) Date of filing: **13.08.2010**

(54) **Method for determining defects in a wind turbine blade root attachment**

Verfahren zur Bestimmung von Defekten in einer Schaufelfußhalterung einer Windturbine

Procédé pour déterminer des défauts dans une base de fixation de pale d'éolienne

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**15.02.2012 Bulletin 2012/07**

(73) Proprietor: **Alstom Wind, S.L.U.**
**08005 Barcelona (ES)**

(72) Inventor: **Bulacio Bossio, Horacio**
**08005, Barcelona (ES)**

(74) Representative: **ZBM Patents**
**Zea, Barlocci & Markvardsen**
**Plaza Catalunya, 1**
**08002 Barcelona (ES)**

(56) References cited:
**EP-A1- 2 037 213**  **WO-A2-2008/148370**
**WO-A2-2009/143849**  **DE-A1- 19 838 172**
**US-A- 1 607 862**  **US-A- 3 534 480**
**US-A- 4 222 173**  **US-A1- 2006 000 269**
**US-A1- 2009 129 925**

## Description

### Field of the invention

The present invention relates to a method for determining defects in a wind turbine blade root attachment.

### BACKGROUND ART

The blades in a wind turbine are very long members that are exposed to great stress. The blades are typically attached, at a blade root portion thereof, to a rotor hub, either directly or through a blade extender, and through a blade root attachment. Blade root attachment comprises a number of bores formed in the blade root portion and a number of bores formed in the blade extender and/or in the hub. The bores are suitable for receiving attaching studs therein for attaching the blade root to the blade extender or hub. Bushings or metallic inserts may be provided within the bores for receiving the studs.

The great stress the blades are subjected to causes a strain. Although this can be mitigated by varying the blade pitch, it has been found that studs become at least deflected but sometimes even broken at a distance from an extender surface causing a longitudinal crack in a leading edge. A visual inspection during maintenance operations usually results in that a stud and bushing deflection is detected. Deflection is typically due to an interference with the bore of the blade extender which is confirmed during a stud removal process. When the stud is removed from the bushing within the bore, scratches formed on the nut that is screwed on the stud are also detected, particularly at a half portion of a washer that is fitted therebetween. Bushing deflection involves a lateral displacement which represents an important quality problem that has to be fixed by checking all the studs and bushings and replacing individually those which become deflected. A repair operation for replacing deflected and/or broken studs and bushings makes necessary the use of special tooling. It has been found however that replaced studs and bushings become broken again.

It would be therefore useful to obtain precise information on stud, and bushing, deformation. In this respect, it would be useful to obtain information on the positioning and misalignment of the bushing on the wind turbine blade root and/or the blade extender.

Methods for measuring the load acting on a wind turbine blade root portion and how this affects the blade root attachment are known in the art and they are mainly based on the use of sensors.

For example, US2006000269 discloses a method in which a first end of a beam is coupled to the rotor blade and a second end of the beam is positioned adjacent the hub. Beam deflection is then measured using at least one sensor, and blade deflection is determined based on beam deflection.

As another example, a method for measuring the deflection of an elongated member in a wind turbine is disclosed in EP2037213. This is carried out by measuring variations on the distance between two points of said elongated member through the use of, for example, a laser range sensor.

The main disadvantage of these known methods is that sensors are expensive and do not provide measurements such as in the bushing thread axis, which is indeed one of the most relevant parameters to characterize potential reliability problems in wind turbine blades. In addition, known methods can not be employed for measuring the perpendicularity of the bushing thread axis to a contact surface between the nut screwed on the stud and the wind turbine blade root.

Document US2009129925A1 discloses a method for determining defects in a wind turbine blade root attachment according to the preamble of claim 1.

### SUMMARY OF THE INVENTION

The present invention provides a reliable, accurate and cost-effective method for determining defects in a wind turbine blade root attachment as defined in claim 1 through which the above mentioned prior art problems can be overcome or at least alleviated.

A blade root attachment comprises a number of spaced apart blade root bores formed in an end surface or flange of the periphery of the blade root and a number of reference bores formed in the blade extender or hub of the wind turbine rotor. Both the blade root and the reference bores are suitable for receiving attaching studs therein for attaching the blade root to the blade extender or hub through the use of corresponding nuts and washers. Bushings or metal inserts can be also provided inserted within at least some of the blade root bores. The studs can be fitted into said bushings. Bushings may have an inner threaded portion.

According to the method of the present invention, at least one attaching stud is first removed from the bore where it is fitted. If the attaching stud is fitted within a bushing in the bore, the attaching stud will be then removed from the bushing. Then, two or more reference bores are selected in the blade extender or hub. Reference bores have an inner wall that is perpendicular to an end surface or flange of the extender or hub and, in operation, is in contact with the blade root.

A number of reference plates, for example one or two, are then provided inside the blade extender or hub. One or several reference laser devices are then fitted within said selected reference bores. In this example, two reference bores have been selected so two reference laser devices are used. The reference laser devices are fitted within the reference bores of the blade extender or hub in a way that the corresponding reference laser beams are projected in line with the respective axis of the selected reference bores. Both projected reference laser beams impinge on the reference plate or plates.

Then, at least one blade root bore is selected in the blade root and a measuring laser device is fitted therein. A measuring laser beam is then projected towards the reference plate impinging thereon. The measuring laser device is fitted within the blade root bore such that the measuring laser beam is in line with the axis of the blade root bore, that is, in line with the axis of a bushing thread portion.

Then, a line is defined by the measuring laser beam impinging on the reference plate and a step is performing of assessing said line for determining defects. Said laser assessing step may comprise, for example, comparing the line representing the measuring laser beam with a line representing the reference laser beam and determining their relative angular deviation.

However, the laser assessing step may comprise determining an equation of a line corresponding to the measuring laser beam. For this purpose, two or more reference plates are provided at different heights respectively from one end of the blade extender. From this line equation, deviation of the axis of the stud fitted within the blade root with regard to the reference laser beams can be assessed.

The slope of the end surface or flange of the blade extender or hub can be also assessed through the use of a comparator according to the method of the invention.

The above mentioned measuring laser device may be carried by an adjustable measuring tool which is not part of the present invention. This adjustable measuring tool is suitable for determining defects in a wind turbine blade root attachment and it is sized such that it can be fitted within blade root bores. The measuring tool is provided with a stem having, at a first end thereof, a laser device receiving portion and a stem. In some examples, the first end of the stem of the tool may be adapted for receiving a comparator for measuring the slope of an end surface of the blade extender or hub.

The second, opposite end of the stem is sized such that it can be inserted within the blade root bore or within a bushing inserted therein, if provided. The second end of the stem of the measuring tool may comprise an adjustable portion that can be driven such that it is moved relative to the first end. The relative displacement of the second end relative to the first end results in a tight fit of the stem against the inside of the blade root bore when the tool has been inserted. Such displacement of the second end may be axial along the stem longitudinal axis or it may be radial, that is, perpendicular to the stem longitudinal axis.

The first end of the stem may have a portion protruding outwards from the reference bore when inserted. This end portion is suitable for receiving a number of labels suitable for being read by a computer. A number of labels are attached spread on the surface of this end portion of the tool stem. The number and size of the labels is such that they can be read through a suitable 3-dimensional coordinate measuring technique (photogrammetry). By means of this technique, photographs are made which are subsequently used for characterizing the longitudinal axis of the blade root bore.

By carrying out the above disclosed method according to the invention, a number of advantages are achieved over the prior art. For example, it is possible to reproduce the real axis of the inner thread of the bushing and to measure the perpendicularity between such axis and the end surface or flange. Therefore, it can be assessed whether imperfections give rise to extra bending loads over the stud. A good quality control of blade can be achieved, and existing problems on installed blades can be checked.

**BRIEF DESCRIPTION OF THE DRAWINGS**

A particular embodiment of the invention will be described in the following, only by way of non-limiting example, with reference to the appended drawings, in which:

Fig. 1 is a fragmentary perspective view of a wind turbine blade root portion attached to a wind turbine blade extender in which the main elements for performing the method of the present invention are shown;

Fig. 2 is a fragmentary perspective view of an enlarged portion of the wind turbine blade root portion attached to the wind turbine blade extender in Fig. 1

Fig. 3 is a graph diagrammatically representing a stud real axis and its orientation relative to a reference bore axis;

Fig. 4 is a sectional view of one embodiment of an adjustable measuring tool with a laser device fitted at one end thereof;

Fig. 5 is perspective view of a comparator; and

Fig. 6 is a sectional view of the comparator in Fig. 5.

## DETAILED DESCRIPTION OF PARTICULAR EMBODIMENTS

A method and a tool for determining defects in a wind turbine blade root attachment are now disclosed with reference to the drawings. The tool shown in the drawings and described herein is not part of the present invention.

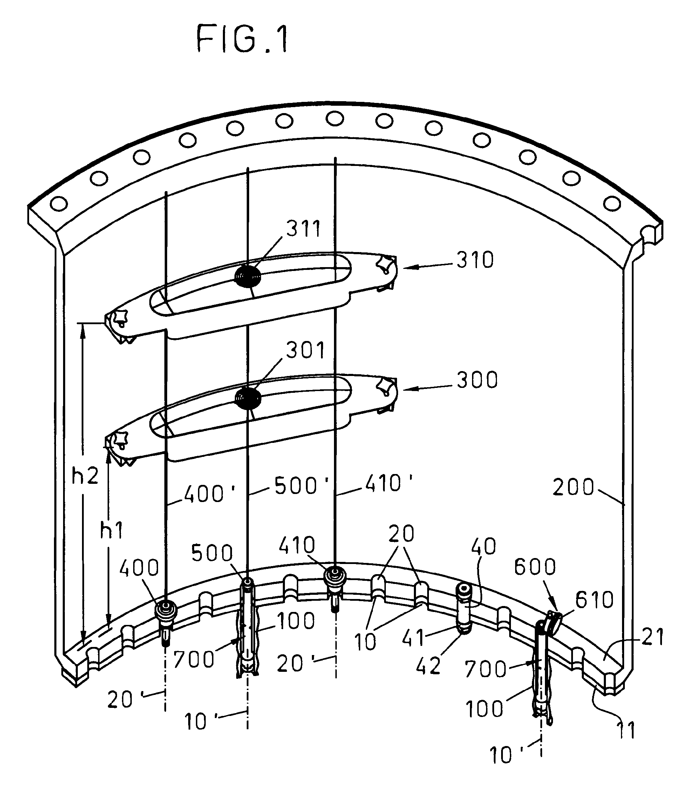

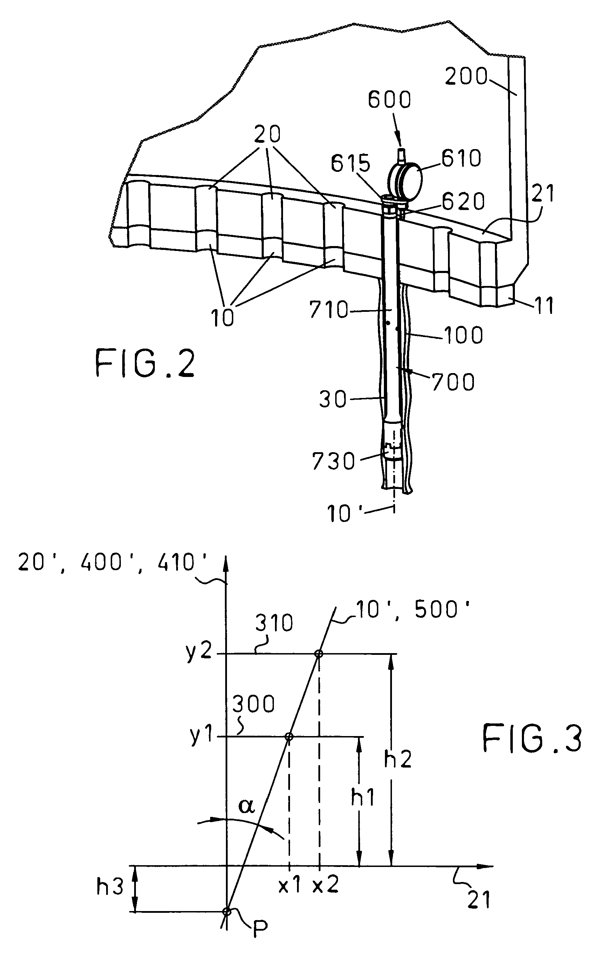

As shown in Figs. 1 and 2, a root portion 100 of a wind turbine blade has an end surface or root flange 11. In use, the root flange 11 is attached to a rotor hub (not shown) through a blade extender 200. Blade extender 200 has an extender flange 21 too. Flanges 11 and 21 are in close contact when root portion 100 and blade extender 200 are attached to each other as shown in Figs. 1 and 2.

The attachment of the blade root portion 100 to the blade extender 200 is carried out through a blade root attachment. The blade root attachment comprises a number of blade root bores 10 and a number of reference bores 20. Blade root and reference bores 10, 20 are arranged such that they are aligned to each other as shown in Figs. 1 and 2.

Blade root bores 10 are formed in the root flange 11 of the root portion 100, and reference bores 20 are formed in the extender flange 21 of the extender 200. It is to be understood, however, that reference bores 20 could be formed also in one end flange of the hub.

Blade root bores 10 and reference bores 20 may be provided with corresponding bushings 30 fitted therein. Bushings 30 are suitable for receiving the attaching studs 40 for coupling the blade extender 200 to the blade root 100 through the use of respective nuts 41 and washers 42.

Both the blade root and extender flanges 11, 21 are substantially perpendicular to the respective cylindrical wall of the root portion 100 and the extender 200. However, the perpendicularity of the extender flange 21 has to be measured in order to obtain more accurate information on deformation of said studs 40 and bushings 30.

For carrying out the method of the invention, at least two reference bores 20 are first selected in the blade extender 200. Two reference plates 300, 310 are provided inside the extender 200 at different heights h1, h2 from the blade extender flange 21. As shown in Fig. 1, the reference plates 300, 310 are arranged such that h2 > h1. Reference plates 300, 310 are made, for example, of methacrylate and they are provided with corresponding target indicators 301, 311.

Two reference laser devices 400, 410 are further provided, fitted within the previously selected reference bores 20. Bushings 30 may be used fitted within the reference bores 20. The reference laser devices 400, 410 are fitted in a way that their projected reference beams 400', 410' are in line with the corresponding axis 20' of the selected reference bores 20, or that of the bushing 30 fitted therein (that is, the inner thread portion thereof). This is carried out by ensuring a tight fit of the laser devices 400, 410 within the reference bores 20. Reference beams 400', 410' projected by the reference laser devices 400, 410 impinge on the respective target indicators 301, 311 in the reference plates 300, 310 that are arranged at said two different heights h1, h2. The respective points where reference beams 400', 410' impinge on indicators 301, 311 allows the position of the reference beams 400', 410' to be accurately assessed.

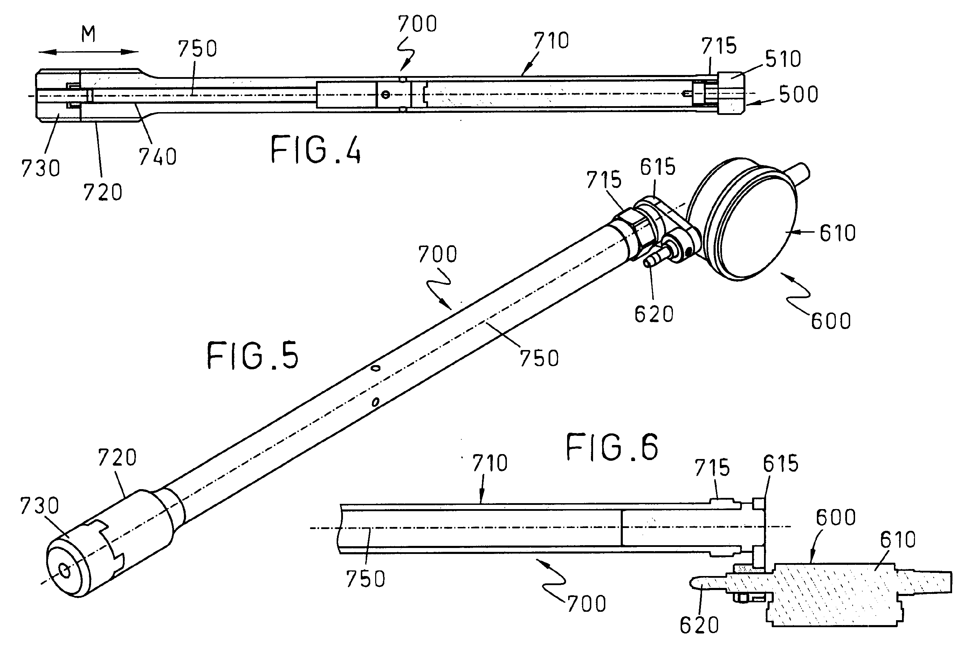

Then, a blade root bore 10 is selected for being measured. For this purpose, several attaching studs 40 are first removed from blade root and reference bores 10, 20 and a measuring laser device 500 is provided. One example of such measuring laser device 500 is shown in Fig. 4. Laser device 500 comprises a laser head 510 that is fitted in a first end 715 of an adjustable measuring tool 700.

Measuring tool 700 is provided with a tool stem 710. Stem 710 has a first end 715 in which laser device 500 is attached through laser head 510. Stem 710 has a second, opposite end 720 that is adapted for being inserted within the blade root bore 10 or within a threaded bushing 30 inserted therein. This second end 720 of the tool stem 710 comprises an adjustable portion 730 that can be driven, for example, by means of an elongated screw (not shown) that can be rotated within an inner treaded portion 740 of the tool stem 710 around the longitudinal axis 750 of the tool 700. Rotation of the elongated screw causes the adjustable portion 730 to be displaced forward and away of the first end 715 of the tool 700 as shown by arrow M. The relative displacement between the adjustable portion 730 and the stem 710 results in a tight fit of the tool 700 against the inner wall of the blade root bore 10 where the adjustable measuring tool 700 has been inserted, or the bushing 30 fitted therein. The construction of the adjustable measuring tool 700 allows the clearance between the thread of the bushing 30 and the thread of the stud 40 to be eliminated such that a real measurement of the stud axis 10' (or the inner threaded portion thereof) is obtained. Although the adjustable portion 730 of the tool 700 has been shown and disclosed herein as being capable of performing an axial displacement along the longitudinal axis 750 of the tool 700 according to arrow M, the adjustable portion 730 of the tool could be moved radially, i.e., perpendicular to the longitudinal axis 750 for achieving such tight fit of the tool 700 within bore 10.

The first end 715 of the tool 700 may be also adapted for carrying a number of labels (not shown) suitable for being read by a computer through a photogrammetry application for characterizing the longitudinal axis 10' of the blade root bore 10.

The first end 715 of the tool stem 710 is also adapted for carrying a comparator 600 for measuring the slope of the end surface or flange 21 of the blade extender 200. One embodiment of such comparator is shown in Figs. 5 and 6.

Continuing with the method according to the present invention, the measuring laser device 500 is fitted, carried by the measuring tool 700, within the bushing 30 in the blade root bore 10. This is carried out by inserting second end 720 of the tool 700 within the selected blade root bore 10 and then driving the tool adjustable portion 730 by rotating elongated screw (not shown) within the inner treaded portion 740 of the tool stem 710 around the longitudinal axis 750 thereof. This causes the adjustable portion 730 to be moved axially away of the first tool end 715 resulting in a tight fit of the tool 700 against the inner wall of the blade root bore 10. Due to such tight fit of the tool 700 inside the blade root bore 10, the measuring beam 500' projected by laser device 500 is in line with the axis 10' of the blade root bore 10 or the axis of the bushing 30 fitted therein (that is, the inner thread portion thereof).

As with the reference laser beams 400', 410', the measuring beam 500' impinges on the reference plates 300, 310 too.

A line equation of the measuring laser beam 500' that is projected to reference plates 300, 310 during a measurement step can be then determined. The line of the measuring laser beam 500' corresponds to blade root bore axis 10'. This line equation therefore allows the angular deviation $\alpha$ of the stud axis 10' with regard to reference laser beams 400', 410' to be determined. The real position of the stud axis 10' (measuring laser beam 500') can be accurately determined through line of axis 10' (measuring laser beam 500').

More particularly, from said line equation it is possible to obtain:

i) the displacement x (y=0) of the stud axis 10' (measuring laser beam 500'),
ii) the point of rotation P (x=0), that is the intersection between the stud axis 10' with one reference axis 400', 410',
iii) the position of the reference bore 20,
iv) the angular deviation $\alpha$ of the stud axis 10' or measuring laser beam 500',
v) the slope of the extender flange 21 to the inner side wall of the extender 200, through a comparator 600 such as the one shown in Figs. 5 and 6.

For determining the angular deviation $\alpha$ it is not necessary to provide two reference plates 300, 310. A single reference plate would be enough for assessing the measuring laser beam 500' for determining defects.

Comparator 600 allows the slope of the blade extender flange 21 to the side wall of the extender 200 to be accurately measured. Comparator 600 comprises a gauge 610 having a follower pin 620. Comparator gauge 610 is coupled to a support plate 615 which in turn is attached to one end of adjustable measuring tool 700 shown in Fig. 4 and which will be fully disclosed below. Support plate 615 is attached by one of its ends to one end of said tool 700 while gauge 610 is rotatably received at the other end thereof. This configuration with the gauge 610 of the comparator 600 attached to the tool separated therefrom allows the gauge 610 to be rotated around the tool longitudinal axis 750. In use, the second end 720 of the tool 700 is fitted within the bushing 30 of a selected reference bore 20 such that the follower pin 620 is in contact with the top surface of the blade extender flange 21. By rotating the gauge 610 around the tool longitudinal axis 750, the slope of the blade extender flange 21 relative to axis 750, that is, to the inner side wall of the extender 200, can be measured accurately.

In one measuring step of the perpendicularity of the blade extender flange 21, and by using the above described comparator 600, an angle of slope $\beta$= 0.06° representing a deviation from the perpendicular was obtained with a variation of 0.05 mm between the upper and lower portions of the extender flange 21. With such a small value, the angle of slope $\beta$ was not considered as important in this particular case.

As diagrammatically depicted in the graph of Fig. 3, the stud real axis 10' is a line defined by coordinate x in a horizontal axis and by coordinate y in a vertical axis. Line 10', that is the measuring laser beam 500', represents the theoretical position of stud 40. The origin of the coordinates is at the extender flange 21 where nuts 41 and washer 42 are supported.

According to Fig. 3, for determining the equation of line 10', two different points y1, y2 were measured at corresponding heights h1, h2, from the extender flange 21 to the respective reference plates 300, 310. In this example, measurements were at h1= 900 mm and h2= 1400 mm, so y1= 900 mm and y2= 1400 mm. Through the use of corresponding target indicators 301, 311 in the reference plates 300, 310, deviation x1, x2 was measured at these points y1, y2 resulting in x1= 8 mm and x2= 6 mm.

Considering the general equation of a line y= a·x + b

The slope is:

$$a = \frac{y2 - y1}{x2 - x1} = \frac{1400 - 900}{8 - 6} = 0.004$$

Then, the y-intercept, that is, the value b at the point where y-axis is crossed by line 10' is:

b= y - a·x= 8- (0,004-1400)= 2.4 mm

Form this measured value of the lateral displacement of the measured stud 40 (or bushing 30) it can be said that a failure of 2,4 mm can be formed due to the contact of the stud 40 with root flange 11.
The equation of line 10' is therefore:

$$y= 0.004·x+2.4$$

A point of rotation P is evaluated at x=0. The point of rotation P is located at the vertical axis of the graph and it is represented by height h3. Measurement according to the above values resulted in P = 600 mm
The angular deviation $\alpha$ of line 10' to the vertical is therefore:

$$\alpha = \tan^{-1}\left(\frac{x2}{y2 + P}\right) = \tan^{-1}\left(\frac{8}{1400 + 600}\right) = 0.229$$

Having the equation of line 10' (measuring laser beam 500'), the misalignment of the axis 10' (or that of the bushing thread) can be assessed.
Through this equation, information on deformation in studs 40 and bushings 30 can be precisely obtained as well as accurate data on their positioning and misalignment.

### Claims

1. A method for determining defects in a wind turbine blade root attachment, the blade root attachment comprising a number of blade root bores (10) formed in a blade root portion (100) and a number of reference bores (20) formed in a blade extender (200) or a hub, the blade root and reference bores (10, 20) being suitable for receiving attaching studs (40) therein for attaching the blade root portion (100) to the blade extender (200) or hub, the method being **characterized in that** it comprises the steps of:

   - selecting at least two of said reference bores (20);
   - providing at least one reference plate (300; 310) from one end (21) of the blade extender (200) or hub;
   - providing a reference laser device (400, 410) such that a reference laser beam (400', 410') is in line with the axis (20') of the selected reference bores (20) and impinges on said reference plates (300; 310);
   - selecting at least one blade root bore (10);
   - providing a measuring laser device (500) in said blade root bore (10) such that a measuring laser beam (500') is in line with the axis of said blade root bore (10') and impinges on said reference plates (300; 310); and
   - assessing said measuring laser beam (500') for determining defects.

2. The method of claim 1, wherein said laser assessing step comprises comparing the line representing the measuring laser beam (500') with a line representing the reference laser beam (400', 410') and determining their relative angular deviation ($\alpha$).

3. The method of claim 1, wherein at least two reference plates (300, 310) are provided at different heights (h1, h2) respectively from one end (21) of the blade extender (200) and wherein the laser assessing step comprises determining an equation of a line corresponding to the measuring laser beam (500').

4. The method of any of the preceding claims, wherein at least some of the blade root bores (10) includes a bushing (30) fitted therein.

5. The method of claim 4, wherein the bushing (30) has an inner threaded portion.

6. The method of any of the preceding claims, wherein the measuring laser beam (500') is in line with the bushing axis (10').

7. The method of any of the preceding claims, wherein the measuring laser beam (500') is in line with the axis of the bushing inner threaded portion.

8. The method of any of the preceding claims, wherein each reference bore (20) has an inner wall that is perpendicular to an end surface of the extender (21) or hub and it is in contact with the blade root portion (100).

9. The method of any of the preceding claims, wherein the step of providing a measuring laser device (500) is carried out by providing an adjustable measuring tool (700) having the measuring laser device (500) fitted therein, said adjustable measuring stud (700) being adapted to be fitted within said blade root bore (10).

10. The method of any of the preceding claims, wherein it further includes the step of measuring the slope ($\beta$) of an end surface (21) of the blade extender (200) or hub.

11. The method of any of the preceding claims, wherein it further comprises an initial step of removing attaching studs (40) from blade root and reference bores (10, 20) in which a laser device (400, 410, 500) is to be fitted.

**Patentansprüche**

1. Verfahren zum Ermitteln von Mängeln an der Blattwurzelbefestigung einer Windenergieanlage, wobei die Blattwurzelbefestigung eine Vielzahl von Blattwurzelbohrungen (10), die in einem Blattwurzelabschnitt (100) ausgebildet sind, und eine Vielzahl von Referenzbohrungen (20) aufweist, die in einem Blattanschluss (200) oder in einer Nabe ausgebildet sind, wobei die Blattwurzel- und Referenzbohrungen (10, 20) dazu geeignet sind Befestigungsbolzen (40) aufzunehmen, um den Blattwurzelabschnitt (100) am Blattanschluss (200) oder an der Nabe zu befestigen, das Verfahren ist **dadurch gekennzeichnet, dass** es die folgenden Schritte aufweist:

   - Auswählen von mindestens zwei der Referenzbohrungen (20);
   - Bereitstellen von mindestens einer Referenzplatte (300, 310) an einem Ende (21) des Blattanschlusses (200) oder der Nabe;
   - Bereitstellen einer Referenzlasereinheit (400, 410), sodass ein Referenzlaserstrahl (400', 410') entlang der Achse (20') der ausgewählten Referenzbohrungen (20) ausgerichtet ist und auf die Referenzplatten (300, 310) auftrifft;
   - Auswählen von mindestens einer Blattwurzelbohrung (10);
   - Bereitstellen einer Messlasereinheit (500) in der Blattwurzelbohrung (10), sodass ein Messlaserstrahl (500') entlang der Achse der Blattwurzelbohrung (10') ausgerichtet ist und auf die Referenzplatten (300, 310) auftrifft; und
   - Auswerten des Messlaserstrahls (500') zum Ermitteln von Mängeln.

2. Verfahren nach Anspruch 1, wobei der Schritt der Laserauswertung ein Vergleichen der Linie, die den Messlaserstrahl (500') darstellt, mit einer Linie, die den Referenzlaserstrahl (400', 410') darstellt, und ein Ermitteln ihrer relativen Winkelabweichung ($\alpha$) aufweist.

3. Verfahren nach Anspruch 1, wobei mindesten zwei Referenzplatten (300, 310) in jeweils verschiedenen Höhen (h1, h2) von einem Ende (21) des Blattanschlusses (200) bereitgestellt werden und wobei der Schritt der Laserauswertung das Ermitteln einer Gleichung für eine Linie aufweist, die dem Messlaserstrahl (500') entspricht.

4. Verfahren nach einem der vorangehenden Ansprüche, wobei mindestens einige der Blattwurzelbohrungen (10) eine darin befestigte Buchse (30) aufweisen.

5. Verfahren nach Anspruch 4, wobei die Buchse (30) einen Innengewindeabschnitt aufweist.

**6.** Verfahren nach einem der vorangehenden Ansprüche, wobei der Messlaserstrahl (500') entlang der Buchsenachse (10') ausgerichtet ist.

**7.** Verfahren nach einem der vorangehenden Ansprüche, wobei der Messlaserstrahl (500') entlang der Achse des Innengewindeabschnitts der Buchse ausgerichtet ist.

**8.** Verfahren nach einem der vorangehenden Ansprüche, wobei jede Referenzbohrung (20) eine Innenwand aufweist, die senkrecht zu einer Endfläche des Anschlusses (21) oder der Nabe steht und die in Kontakt steht mit dem Blattwurzelabschnitt (100).

**9.** Verfahren nach einem der vorangehenden Ansprüche, wobei der Schritt Bereitstellen einer Messlasereinheit (500) ausgeführt wird, indem ein verstellbares Messwerkzeug (700) bereitgestellt wird, in das die Messlasereinheit (500) eingepasst ist, wobei der verstellbare Messbolzen (700) für ein Einpassen in die Blattwurzelbohrung (10) angepasst ist.

**10.** Verfahren nach einem der vorangehenden Ansprüche, wobei es außerdem den Schritt für das Messen der Steigung (ß) einer Endfläche (21) des Blattanschlusses (200) oder der Nabe aufweist.

**11.** Verfahren nach einem der vorangehenden Ansprüche, wobei es außerdem den anfänglichen Schritt für das Entfernen der Befestigungsbolzen (40) aus den Blattwurzel- und den Referenzbohrungen (10, 20) aufweist, in denen eine Lasereinheit (400, 410, 500) befestigt werden soll.

**Revendications**

**1.** Méthode de détermination de malfaçons d'un dispositif de fixation d'emplanture de pale d'une éolienne, comprenant le dispositif de fixation d'emplanture de pale une quantité de trous (10) d'emplanture de pale formés dans une partie (100) d'emplanture de pale et une quantité de trous de référence (20) formés dans un raccord (200) de pale ou un moyeu, étant les trous d'emplanture de pale et les trous de référence (10, 20) adaptés pour recevoir des goujons de fixation (40) dans les mêmes pour relier la partie (100) d'emplanture de pale avec le raccord (200) de pale ou moyeu, la méthode **se caractérisant en ce qu'**elle comprend les étapes suivantes:

- choisir au moins deux desdits trous de référence (20);
- fournir au moins un plateau de référence (300, 310) à un bout (21) du raccord (200) de pale ou du moyeu;
- fournir un dispositif (400, 410) laser de référence de façon qu'un faisceau (400', 410') laser de référence est aligné avec l'axe (20') des trous de référence (20) choisis et qu'il percute contre lesdits plateaux de référence (300, 310); et
- choisir au moins un trou (10) d'emplanture de pale ;
- fournir un dispositif (500) laser de mesure dans ledit trou (10) d'emplanture de pale de façon qu'un faisceau (500') laser de mesure est aligné avec l'axe dudit trou (10) d'emplanture de pale et qu'il percute contre lesdits plateaux de référence (300, 310) ; et
- estimation dudit faisceau (500') laser de mesure pour effectuer la détermination de malfaçons.

**2.** Méthode selon la revendication 1, dans laquelle ladite étape d'estimation moyennant laser comprend comparer la ligne représentant le faisceau (500') laser de mesure avec une ligne représentant le faisceau (400', 410') laser de référence et déterminer leur déviation angulaire relative ($\alpha$).

**3.** Méthode selon la revendication 1, dans laquelle au moins deux plateaux de référence (300, 310) sont fournis à deux hauteurs (h1, h2) différentes respectivement d'un bout (21) du raccord (200) de pale et dans laquelle l'étape de détermination par laser comprend déterminer une équation d'une ligne correspondant au faisceau (500') laser de mesure.

**4.** Méthode d'une quelconque des revendications précédentes, dans laquelle au moins certains des trous (10) d'emplanture de pale incluent une douille (30) montée à l'intérieure.

**5.** Méthode selon la revendication 4, dans laquelle la douille (30) a une portion à orifice taraudé.

**6.** Méthode selon l'une quelconque des revendications précédentes, dans laquelle le faisceau (500') laser de mesure est aligné avec l'axe (10') de la douille.

7. Méthode selon l'une quelconque des revendications précédentes, dans laquelle le faisceau (500') laser de mesure est aligné avec l'axe de la portion de la douille à orifice taraudé.

8. Méthode selon l'une quelconque des revendications précédentes, dans laquelle chacun des trous de référence (20) a une paroi interne qui est perpendiculaire à une surface d'extrémité du raccord (21) ou moyeu et qui est en contact avec la partie (100) d'emplanture de pale.

9. Méthode selon l'une quelconque des revendications précédentes, dans laquelle l'étape de fournir un dispositif (500) laser de mesure est effectuée en fournissant un instrument de mesure (700) ajustable ayant le dispositif (500) laser de mesure monté dans ceci, étant ledit goujon de mesure (700) ajustable adapté pour être emboîté dans ledit trou (10) d'emplanture de pale.

10. Méthode selon l'une quelconque des revendications précédentes, comprenant en outre l'étape de mesurer la pente (ß) d'une surface (21) d'extrémité du raccord (200) de pale ou moyeu.

11. Méthode selon l'une quelconque des revendications précédentes, comprenant en outre l'étape initiale d'enlèvement des goujons de fixation (40) des trous d'emplanture de pale et des trous de référence (10, 20) dans lesquels un dispositif laser (400, 410, 500) doit être monté.

# FIG.1

FIG.2

FIG.3

FIG.4

FIG.5

FIG.6

EP 2 418 377 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006000269 A
- EP 2037213 A
- US 2009129925 A1